# FASCICULE DE BREVET EUROPEEN

(11) **EP 2 740 016 B1**
(45) Date de publication et mention de la délivrance du brevet: **09.01.2019**
(21) Numéro de dépôt: 12758522.2
(22) Date de dépôt: 27.07.2012
(51) Int. Cl.: G06F 3/01, G06F 3/033, B60K 37/06, G06F 3/0354, G06F 3/041

(54) **MODULE D'INTERFACE TACTILE**
BERÜHRUNGSSCHNITTSTELLENMODUL
TOUCH INTERFACE MODULE

(30) Priorité: 03.08.2011 FR 1102436
(43) Date de publication de la demande: 11.06.2014
(73) Titulaire: DAV, 94046 Creteil Cedex (FR)
(72) Inventeur: TISSOT, Jean-Marc, F-74250 Viuz en Sallaz (FR)
(74) Mandataire: Pothmann, Karsten
(86) Numéro de dépôt international: PCT/FR2012/000315
(87) Numéro de publication internationale: WO 2013/017747

(56) Documents cités:
- EP-A1- 1 544 720
- WO-A1-2010/085575
- KR-A- 20100 045 543
- US-A1- 2006 256 075
- US-A1- 2011 141 046

## Description

La présente invention concerne un module d'interface tactile pour véhicule automobile, permettant notamment de transmettre un retour haptique à un utilisateur, tel qu'un retour vibratoire.

Dans le domaine automobile, des modules de commande multifonction, réalisés par exemple sous la forme d'un joystick ou d'un bouton rotatif, sont de plus en plus utilisés pour commander des systèmes électriques ou électroniques, tels qu'un système de climatisation, un système audio ou encore un système de navigation.

De tels modules peuvent être associés à un écran d'affichage et permettre une navigation dans des menus déroulants comportant différentes commandes relatives aux systèmes à commander.

Cependant, la présence de fonctions de plus en plus nombreuses et complexes entraîne une multiplication de ces modules. Aussi, pour augmenter le nombre de fonctions intégrées et améliorer l'ergonomie des interfaces homme-machine, l'utilisation d'un module d'interface à surface tactile, au niveau d'une surface de commande ou bien d'un écran tactile, est considérée comme un développement intéressant.

Lorsqu'un utilisateur exerce une pression sur la surface tactile d'un tel capteur, on peut mesurer la pression ou la force appliquée et/ou déterminer la localisation de l'endroit où la pression ou la force est exercée. Dans ce cas, un appui de l'utilisateur est par exemple associé à la sélection d'une commande.

En outre, pour signaler à l'utilisateur que sa commande a bien été prise en compte, que cela soit en situation normale de conduite ou d'arrêt mais également en situation dégradée (manipulation en aveugle, charge cognitive importante), il est important que l'utilisateur ait un retour haptique de manière à rester concentré sur la route en diminuant l'effort cognitif associé à la vérification de la réalisation de son action sur la surface tactile.

Pour cela, on connaît déjà des modules de commande à retour haptique comportant des actionneurs, tels que des actionneurs électromagnétiques, reliés au module d'interface pour transmettre un mouvement de vibration, de manière que l'utilisateur perçoive un retour haptique l'informant que sa commande a bien été prise en compte.

Ces actionneurs électromagnétiques comportent une bobine et un ou plusieurs aimants mobiles en translation par rapport à la bobine. En alimentant la bobine, les aimants sont mis en mouvement, et ce mouvement est transmis à la surface tactile.

Le document KR 2010-0045543 A décrit un module d'interface tactile à retour haptique, comprenant un écran tactile et une pluralité d'actionneurs. Dans un mode de réalisation, au moins un actionneur est du type électromagnétique et comporte une bobine et un aimant. Un ressort plat est situé entre l'écran tactile et l'aimant pour amplifier le retour haptique généré par l'actionneur électromagnétique.

Les documents EP 1 310 860 A1 et US 2010/0153845 A1 décrivent aussi des modules d'interface tactile à retour haptique avec des actionneurs comprenant des ressorts reliés à des parties mobiles d'actionneurs électromagnétiques.

Un second montage, appelé "voice-coil", "bobine acoustique" puisqu'associé sur le principe technique aux haut-parleurs, s'obtient en montant à l'inverse la bobine mobile par rapport à un ou plus aimants relativement fixes.

Cependant, lorsque les noyaux mobiles arrivent en bout de course, ils heurtent des butoirs ou bien le châssis de l'actionneur. Ces chocs répétés, outre le bruit indésirable qu'ils produisent, contribuent à l'usure des pièces. Ils diminuent ainsi l'efficacité du retour haptique et peuvent à terme rendre nécessaire le remplacement de tout ou partie de l'actionneur.

Pour pallier ce défaut, il est connu d'implémenter des éléments amortisseurs, entre les pièces appelées à s'entrechoquer. Cependant, du fait même de leur fonction d'amortisseurs, ces pièces absorbent de l'énergie qui aurait servi à la mise en mouvement. Cette absorption d'énergie diminue donc le rendement global de l'actionneur.

L'invention propose notamment d'améliorer le ressenti haptique, tout en évitant les chocs entre les pièces mécaniques de l'actionneur.

À cet effet, l'invention a pour objet un actionneur de module d'interface tactile à retour haptique selon la revendication 1.

L'actionneur ainsi obtenu permet d'obtenir une gamme étendue de réponse haptiques.

Ledit actionneur peut en outre présenter une ou plusieurs des caractéristiques suivantes, prises seules ou en combinaison.

L'actionneur secondaire comporte un oscillateur piézoélectrique.

L'actionneur secondaire comporte des moyens d'actionnement électromagnétiques.

Il comporte en outre une unité de contrôle configurée pour piloter l'actionneur principal et l'actionneur secondaire de manière à moduler le retour haptique généré par l'actionneur principal au moyen de l'actionneur secondaire.

L'unité de contrôle est configurée pour actionner l'actionneur secondaire en phase avec l'actionneur principal de sorte que l'amplitude du mouvement dudit actionneur secondaire s'additionne à celle de l'actionneur principal.

L'unité de contrôle est configurée pour actionner l'actionneur secondaire en opposition de phase avec l'actionneur principal de sorte que l'amplitude du mouvement dudit actionneur secondaire se soustraie à celle de l'actionneur principal.

L'unité de contrôle est configurée pour actionner les actionneurs principal et secondaire de manière asynchrone.

L'actionneur secondaire est relié d'une part au châssis et d'autre part au noyau mobile.

Il comporte deux actionneurs secondaires, reliés d'une part au châssis et d'autre part au noyau mobile, disposés de part et d'autre dudit noyau mobile le long de l'axe de déplacement du noyau mobile.

L'invention a aussi pour objet un module d'interface tactile à retour haptique selon la revendication 10.

Le module peut en outre présenter une ou plusieurs des caractéristiques suivantes, prises seules ou en combinaison.

Les moyens d'actionnement électromagnétiques comportent une bobine sur un premier support et des aimants sur un second support, l'un des supports étant solidaire du châssis, l'autre étant solidaire du noyau mobile, et il comporte au moins un actionneur secondaire relié d'une part au premier support, et d'autre part au second support.

Il comporte en outre un boîtier contenant au moins partiellement des éléments dudit module d'interface, et en outre au moins une liaison élastique entre le noyau mobile et le fond du boîtier.

Il comporte une pluralité d'actionneurs pilotés par une unité de contrôle commune configurée pour actionner les actionneurs selon des motifs prédéterminés pour générer une gamme de retours haptiques différents.

Enfin, l'invention a aussi pour objet un procédé de génération d'un retour haptique dans un module d'interface tactile à retour haptique comprenant une surface tactile apte à détecter un appui d'un utilisateur et au moins un actionneur, selon la revendication 14.

D'autre avantages et caractéristiques apparaîtront à la lecture de la description des figures suivantes, données à titre d'exemple non limitatif.
- la figure 1 est une vue en coupe schématique d'un mode de réalisation de module d'interface tactile selon l'invention,
- la figure 2 est une vue en coupe schématique d'un second mode de réalisation de module d'interface selon l'invention,
- la figure 3 est une vue en éclaté d'un mode de réalisation d'un actionneur selon l'invention,
- la figure 4 est une vue latérale de l'actionneur de la figure 3 monté dans un module d'interface tactique,
- les figures 5 à 9 sont des vues en coupes schématiques d'autres modes de réalisation d'un actionneur selon l'invention.

Sur toutes les figures les mêmes références s'appliquent aux mêmes éléments.

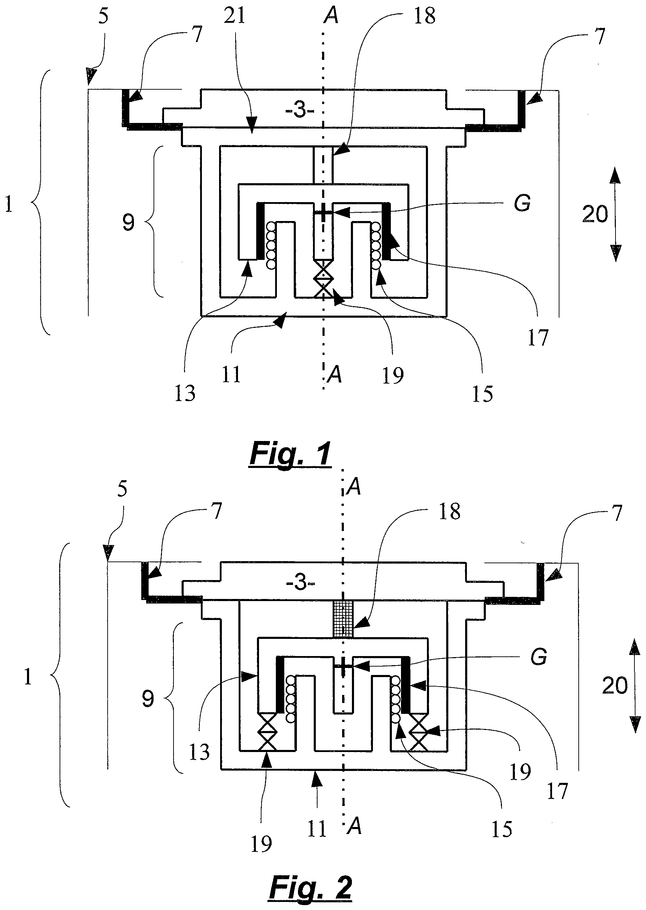

En figure 1 est montré de façon schématique en coupe un module d'interface tactile à retour haptique 1, par exemple pour un tableau de commande de véhicule automobile, ou encore pour une console centrale de véhicule automobile, permettant de commander des systèmes électriques ou électroniques du véhicule, et pouvant transmettre un retour haptique à un utilisateur ayant par exemple modifié ou sélectionné une commande de manière à assurer à l'utilisateur la prise en compte de la commande modifiée ou sélectionnée.

Le module d'interface comprend une surface tactile 3, par exemple utilisant une technologie capacitive, ou de résistances sensibles à la pression (Force Sensing Resistor, FSR), pour détecter la localisation du doigt d'un utilisateur sur une position de sa surface correspondant à une commande. Il est aussi possible d'utiliser une dalle tactile transparente et superposée à un écran d'affichage, fonctionnant par exemple par détection des ondes de surface.

Sur la figure 1, la surface tactile est liée de manière flottante au bâti 5 du module d'interface tactile 1. La liaison entre la surface 3 et le bâti 5 se fait par une liaison 7 de type membrane semi-rigide, ou tout autre moyen de fixation permettant des mouvements limités, par exemple en vibration le long de l'axe *A-A* perpendiculaire à la surface tactile 3.

La surface tactile 3 est reliée à un actionneur 9 qui provoque le retour haptique lors de la détection de l'appui de l'utilisateur. Cet actionneur 9 comporte d'une part un châssis 11, rendu solidaire de la surface tactile 3, et un noyau mobile 13 coopérant avec le châssis 11.

Le noyau mobile 13, logé dans le châssis 11 est mis en mouvement entre des positions extrémales par des moyens d'actionnement électromagnétiques 15, 17. Lors de ce mouvement de va-et-vient, le noyau alterne des phases d'accélération et de décélération, lors desquelles le noyau mobile 13 entraîne la mise en mouvement de la surface tactile 3, et donc le retour haptique. Les moyens d'actionnement électromagnétiques 15, 17 font donc partie d'un actionneur principal, apte à générer un retour haptique en fonction de l'appui détecté.

En outre, l'actionneur 9 comporte un actionneur secondaire 18 piloté, et un moyen élastique 19 précontraint, disposés de part et d'autre du noyau mobile 13. Le noyau mobile 13 est pris entre cet actionneur secondaire 18 piloté, et le moyen élastique 19 précontraint, respectivement situés entre la surface tactile 3 et le noyau mobile 13, et entre ledit noyau mobile 13 et le châssis 11.

Le moyen élastique 19 assiste les moyens d'actionnement électromagnétiques 15, 17 en ce qu'ils stocke une partie de l'énergie cinétique communiquée au noyau mobile lors de ses phases de décélération sous forme d'énergie potentielle élastique, pour ensuite la restituer lors des phases d'accélération.

Le moyen élastique 19 précontraint et l'actionneur secondaire 18 peuvent définir en l'absence d'alimentation de la bobine une position de repos du noyau mobile 13. La disposition du moyen élastique 19 et de l'actionneur secondaire 18 fait que cette position de repos est flottante : le noyau mobile 13 n'est en contact avec aucun autre composant de l'actionneur 9.

L'actionneur secondaire 18 peut comporter un ou des oscillateurs piézoélectriques, ou bien des moyens d'actionnement électromagnétiques tels qu'une bobine et des aimants de taille inférieure à ceux utilisés 15, 17. L'actionneur secondaire 18 peut aussi comporter des moyens élastiques pour l'amortissement des chocs.

Le moyen élastique 19 peut comprendre un ou des ressorts hélicoïdaux ou une ou des lames ressort.

Il est aussi possible d'utiliser un matériau élastique, tel qu'un polymère expansé de type uréthane, un ionomère (polymère réticulé ioniquement), ou du caoutchouc.

Un exemple de mode de réalisation place le moyen élastique 19 et l'actionneur secondaire de manière alignée sur l'axe *A-A,* qui est parallèle à la direction du mouvement du noyau mobile 13, matérialisée par la flèche 20, et qui passe par le centre de gravité G du noyau mobile 13. Ainsi, ils ne génèrent aucun couple sur le noyau mobile 13. Ceci a pour effet d'éviter la mise en rotation dudit noyau mobile 13, qui peut impliquer qu'il se coince ou bien qu'il heurte d'autres pièces mécaniques.

En particulier, selon une variante non représentée, on peut prévoir que le moyen élastique 19 est composé de plusieurs éléments élastiques, ou que l'actionneur secondaire 18 est composé de plusieurs éléments pilotés, et que ceux-ci sont régulièrement répartis autour de l'axe *A-A,* afin que la somme des couples qu'ils exercent sur le noyau mobile soit nulle.

Pour réaliser les moyens d'actionnement électromagnétiques 15, 17, le châssis 11 porte une bobine 15 pouvant fournir un champ magnétique et le noyau mobile 13 porte au moins un aimant 17, préférentiellement plusieurs, disposés près de la bobine 15 et libres en translation le long de l'axe *A-A.* Un montage inverse, dans lequel le châssis 11 porte les aimants 17 et le noyau mobile 13 porte la bobine 15 est cependant aussi envisageable.

La figure 1 montre un mode de réalisation d'un actionneur dit "suspendu". Par suspendu, on entend que l'actionneur 9 n'est pas relié au bâti 5 du module d'interface tactile 1, et le châssis 11 est solidaire de la surface tactile 3.

Dans le montage suspendu, c'est le noyau mobile 13 qui met en mouvement la surface tactile 3 pour générer le retour haptique.

Le châssis 11 présente un couvercle 21 faisant support pour la fixation à la surface tactile 3. Le châssis 11 forme un réceptacle accueillant le reste de l'actionneur 9. L'actionneur secondaire 18 de l'actionneur 9 est relié au couvercle 21 du châssis 11 d'une part et à l'étrier 13 d'autre part, et le moyen élastique 19 est relié au châssis 11 d'une part et à l'étrier 13 d'autre part.

L'actionneur 9 forme alors un bloc fonctionnel bien défini, aisément montable et démontable du module d'interface 1. En effet, ce bloc fonctionnel est simplement vissé ou clipsé à la surface tactile 3, et peut donc être interchangé rapidement, sans que le moyen élastique 19 ou l'actionneur secondaire 18 ait à être manipulé. L'actionneur 9 peut éventuellement être collé pour une fixation moins coûteuse au détriment de l'interchangeabilité.

Il est cependant envisageable de réaliser une variante de ce montage, montrée en figure 2, où le châssis 11, n'ayant pas de couvercle 21, est ouvert sur sa partie supérieure, et où l'actionneur secondaire 18 de l'actionneur 9 est relié directement à la surface tactile 3 d'une part et au noyau mobile 13 d'autre part, et le moyen élastique 19 est relié au châssis 11 d'une part et au noyau mobile 13 d'autre part. En figure 2 le moyen élastique 19 comporte deux éléments disposés symétriquement autour de l'axe *A-A*, entre le noyau mobile 13 et le châssis 11 au niveau de supports des moyens d'actionnement électromagnétiques, ici un support de la bobine 15 solidaire ou partie intégrante du châssis, et un support des aimants 17 solidaire ou partie intégrante du noyau mobile 13.

Un autre mode de réalisation non représenté prévoit l'utilisation d'actionneurs secondaires 18 supplémentaires en lieu et place des éléments de moyens élastiques 19.

Selon un exemple de réalisation, on prévoit que le châssis 11 et le noyau mobile 13 comportent des moyens de guidage 13, 33 par coopération de forme. À cette fin, le noyau mobile 13 présente une section en E dont la branche centrale est enchâssée dans une portion à section en U correspondante du châssis 11.

Le pilotage de l'actionneur 9 conjointement avec les moyens d'actionnement électromagnétiques 15, 17 et par l'actionneur secondaire 18 permettent de varier les formes d'oscillations du noyau mobile 13. Il est donc possible de générer différents retours haptiques qui peuvent servir à signifier à l'utilisateur autant d'informations variées : la prise en compte de la sélection, du mouvement ou au contraire leur rejet, ou bien la détection d'une saisie erronée.

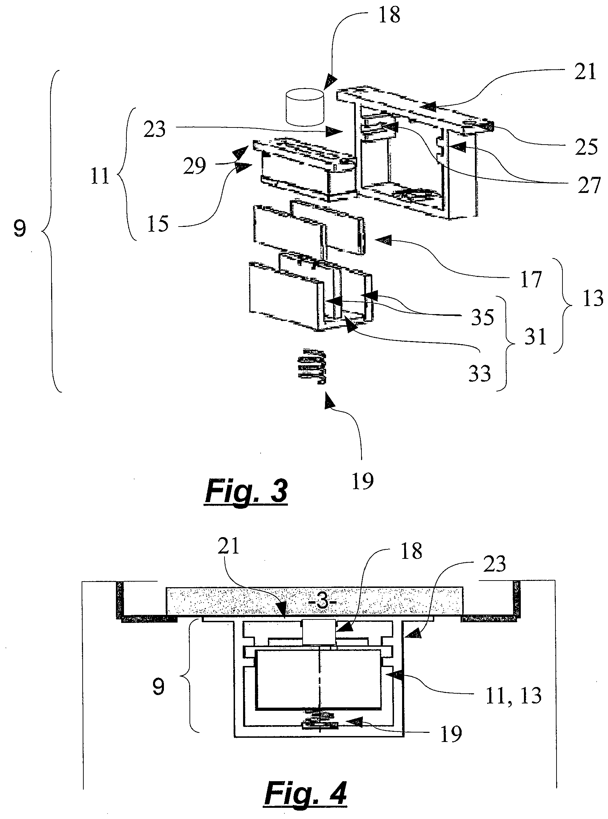

Les figures 3 et 4 représentent une autre variante de réalisation d'un actionneur 9 suspendu.

Le châssis 11 est composé de deux parties : une bobine 15 et un support fixe 23. Le support fixe 23, forme un cadre et entoure la bobine 15. Il accueille aussi les autres pièces de l'actionneur 9. Il présente sur sa partie supérieure formant couvercle 21 deux préperçages 25, dans lesquels sont logées des vis de maintien qui le fixent à la surface tactile 3. En son intérieur, il présente deux sites d'encliquetage 27, destinés à être en prise avec deux languettes 29 complémentaires sur les côtés de la bobine 15, afin de maintenir celle-ci en place, comme vu sur la figure 4.

Le noyau mobile 13 comporte deux aimants 17, qui sont maintenus en vis-à-vis des côtés de la bobine 15, et un étrier 31, auxquels sont fixés les aimants 17 par clipsage, surmoulage ou collage. L'étrier 31 a une section transversale en E, dont la branche centrale 33 est enchâssée dans la bobine 15 en dépassant légèrement à chaque extrémité de la bobine 15. Les deux branches latérales 35 portent les aimants 17.

Lors de l'assemblage, l'ensemble bobine 15, noyau mobile 13, actionneur secondaire 18 et ressort 19 est d'abord assemblé séparément, puis comprimé pour précontraindre les ressorts 19A et 19B. Enfin il est inséré dans le support fixe 23 par l'une des ouvertures latérales dudit support fixe.

L'actionneur 9 ainsi assemblé est ensuite vissé sur la surface interne ou arrière de la surface tactile 3, comme vu sur la figure 4.

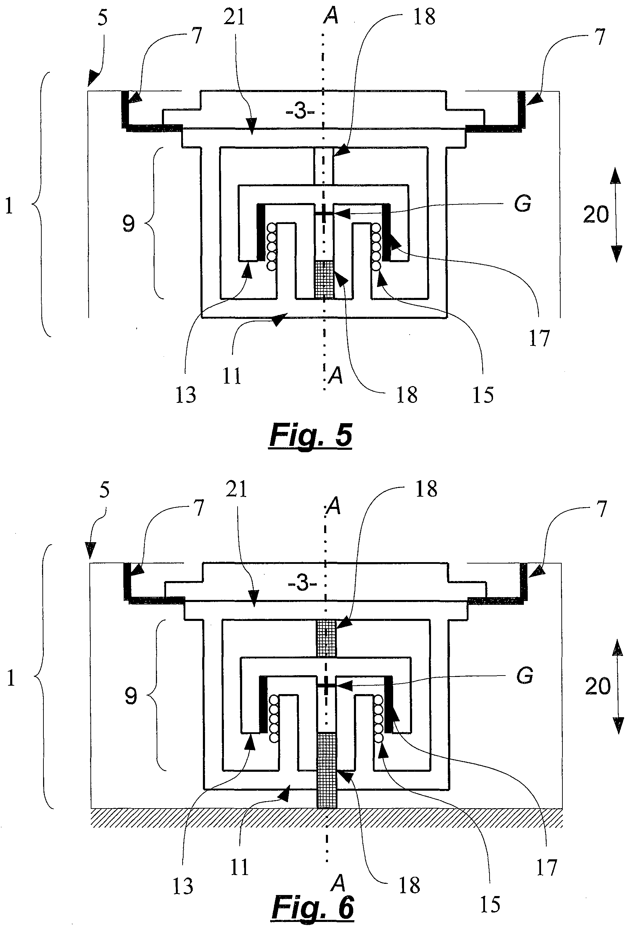

La figure 5 montre de façon schématique un mode de réalisation alternatif du module d'interface 1. Dans ce mode de réalisation, l'actionneur 9 comporte deux actionneurs secondaires 18, situés de part et d'autre du noyau mobile 13.

En figure 6, le bâti 5 du module d'interface 1 forme un boîtier contenant au moins en partie des éléments dudit module d'interface. Ce boîtier comporte un fond, et l'actionneur 9 comporte un actionneur secondaire 18 supplémentaire disposé entre le noyau mobile 13 et le fond du boîtier.

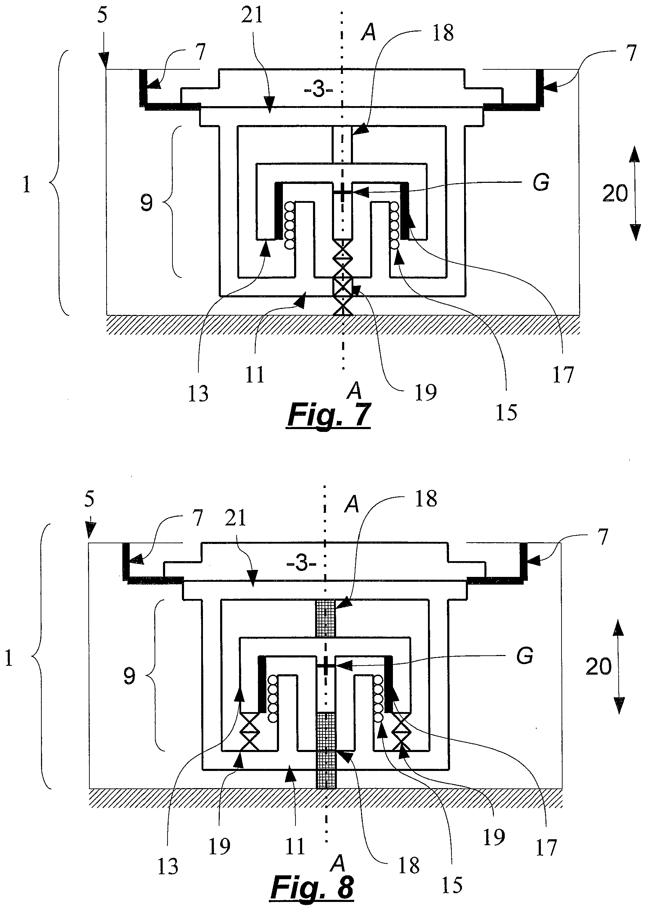

Le mode de réalisation représenté en figure 7 se différencie de celui représenté en figure 6 par la présence d'un moyen élastique 19 entre le noyau mobile 13 et le fond du boîtier, en lieu et place de l'actionneur secondaire 18 supplémentaire.

Le mode de réalisation représenté en figure 8 est analogue à celui de la figure 7, et comporte en outre des moyens élastiques 19 reliant le noyau mobile 13 aux moyens d'actionnement électromagnétiques, ici la bobine 15.

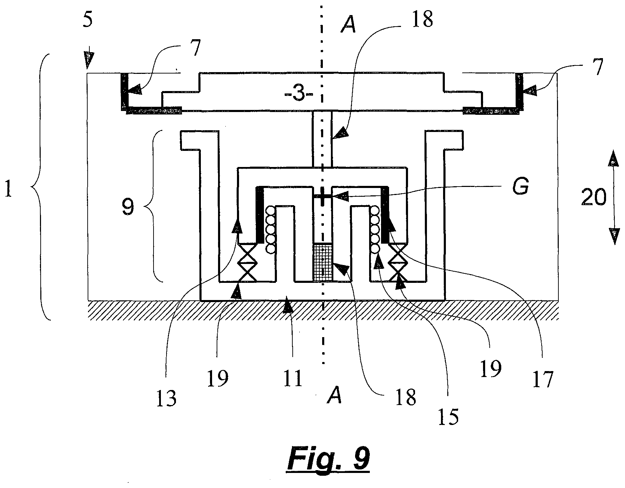

La figure 9 montre un mode de réalisation dit « lié ». Par lié on entend que le châssis 11 est solidaire du fond du bâti 5 et non plus de la surface tactile 3, et le noyau mobile 13 est relié à la surface tactile 3, via un actionneur secondaire 18.

Le châssis 11 ne présente pas de couvercle 21, pour permettre le passage de la liaison à la dalle tactile 3 que représente l'actionneur secondaire 18. Alternativement, ladite liaison peut être faite par une liaison rigide ou un moyen élastique 19, et éventuellement passer par une ouverture dans le couvercle 21 si celui-ci est préservé.

Un mode de réalisation supplémentaire non représenté peut être obtenu en remplaçant les moyens élastiques supplémentaires 19 du mode de réalisation de la figure 8 par des actionneurs secondaires 18.

Dans tous les modes de réalisation précédemment mentionnés, le ou les moyens d'actionnement secondaire 18 sont pilotés par une unité de contrôle, pilotant éventuellement les moyens d'actionnement 15, 17 de l'actionneur principal et des actionneurs secondaires 18 selon des motifs prédéterminés pour générer une gamme de retours haptiques différents.

Pour ce faire, l'unité de contrôle peut déclencher le ou les actionneurs secondaires 18 en phase avec les moyens d'actionnement principaux 15, 17, de sorte que leurs amplitudes s'additionnent ; ou bien à l'inverse l'unité de contrôle peut déclencher le ou les actionneurs secondaires 18 en opposition de phase avec les moyens d'actionnement principaux 15, 17, de sorte que leurs amplitudes se soustraient.

En outre, l'unité peut déclencher les actionneurs secondaires 18 de manière asynchrone avec les moyens d'actionnement principaux 15, 17. De la sorte, un retour tactile sous forme de marche, présentant deux ou plus niveaux d'amplitude est obtenu. En outre, les actionneurs secondaires 18 peuvent être utilisés pour entretenir la vibration du noyau mobile 13 initiée par les moyens d'actionnement principaux 15, 17, avec une consommation d'énergie moindre.

L'utilisation d'au moins un actionneur secondaire 18 permet de produire une gamme étendue de réponses haptiques. Le ou les actionneurs secondaires 18 peuvent en outre être implémentés de manière compacte dans les architectures d'actionneur 9 déjà existantes en remplaçant des moyens élastiques 19.

## Revendications

1. Actionneur (9) de module d'interface (1) tactile à retour haptique, le module d'interface comprenant une surface tactile (3) apte à détecter au moins une caractéristique d'un appui d'un utilisateur, l'actionneur (9) comportant :
- un châssis (11) et
- un actionneur principal doté d'un noyau mobile (13), ledit noyau mobile (13) coopérant avec le châssis (11) et étant destiné à être entraîné en mouvement entre des positions extrémales pour générer le retour haptique,
- l'actionneur principal étant relié à la surface tactile (3) et apte à générer un retour haptique en fonction de l'appui détecté et comprenant des moyens d'actionnement électromagnétiques (15, 17) pour entraîner en mouvement le noyau mobile (13) ;
**caractérisé en ce que** l'actionneur (9) comporte en outre un actionneur secondaire (18) piloté relié au noyau mobile (13) et coopérant avec celui-ci, ledit actionneur secondaire (18) permettant ainsi de faire varier les formes d'oscillation du noyau mobile (13), et une unité de contrôle configurée pour piloter l'actionneur principal et l'actionneur secondaire (18) de manière à moduler le retour haptique généré par l'actionneur principal au moyen de l'actionneur secondaire (18).

2. Actionneur (9) selon la revendication 1, **caractérisé en ce que** l'actionneur secondaire (18) comporte un oscillateur piézoélectrique.

3. Actionneur (9) selon la revendication 1, **caractérisé en ce que** l'actionneur secondaire (18) comporte des moyens d'actionnement électromagnétiques.

4. Actionneur (9) selon l'une des revendications 1 à 3, **caractérisé en ce que** l'unité de contrôle est configurée pour actionner l'actionneur secondaire (18) en phase avec l'actionneur principal de sorte que l'amplitude du mouvement dudit actionneur secondaire (18) s'additionne à celle de l'actionneur principal.

5. Actionneur (9) selon l'une des revendications 1 à 3, **caractérisé en ce que** l'unité de contrôle est configurée pour actionner l'actionneur secondaire (18) en opposition de phase avec l'actionneur principal de sorte que l'amplitude du mouvement dudit actionneur secondaire (18) se soustraie à celle de l'actionneur principal.

6. Actionneur (9) selon l'une des revendications 1 à 5, **caractérisé en ce que** l'unité de contrôle est configurée pour actionner les actionneurs principal et secondaire (18) de manière asynchrone.

7. Actionneur (9) selon l'une au moins des revendications précédentes, **caractérisé en ce que** l'actionneur secondaire (18) est relié d'une part au châssis (11) et d'autre part au noyau mobile (13).

8. Actionneur (9) selon l'une au moins des revendications 1 à 6, **caractérisé en ce que** l'actionneur secondaire (18) est relié d'une part au châssis et d'autre part à la surface tactile (3).

9. Actionneur (9) selon l'une au moins des revendications 1 à 7, **caractérisé en ce qu'**il comporte deux actionneurs secondaires (18), reliés d'une part au châssis (11) et d'autre part au noyau mobile (13), disposés de part et d'autre dudit noyau mobile (13) le long de l'axe de déplacement (A-A) du noyau mobile (13).

10. Module d'interface (1) tactile à retour haptique, le module d'interface comprenant une surface tactile (3) apte à détecter un appui d'un utilisateur, et au moins un actionneur (9) selon la revendication 1.

11. Module d'interface (1) selon la revendication 10, les moyens d'actionnement électromagnétiques comportant une bobine (15) sur un premier support et des aimants (17) sur un second support, l'un des supports étant solidaire du châssis (11), l'autre étant solidaire du noyau mobile (13), **caractérisé en ce qu'**il comporte au moins un actionneur secondaire (18) relié d'une part au premier support, et d'autre part au second support.

12. Module d'interface (1) selon l'une au moins des revendications 10 ou 11, comportant en outre un boîtier contenant au moins partiellement des éléments dudit module d'interface, **caractérisé en ce qu'**il comporte en outre au moins un moyen élastique (19) entre le noyau mobile (13) et le fond du boîtier.

13. Module d'interface (1) selon l'une au moins des revendications 10 à 12, **caractérisé en ce qu'**il comporte une pluralité d'actionneurs secondaires (18) pilotés par une unité de contrôle commune configurée pour actionner les actionneurs principal et secondaires (18) selon des motifs prédéterminés pour générer une gamme de retours haptiques différents.

14. Procédé de génération d'un retour haptique dans un module d'interface (1) tactile à retour haptique comprenant une surface tactile (3) apte à détecter un appui d'un utilisateur et au moins un actionneur (9) selon la revendication 1, **caractérisé en ce que** le procédé comporte les étapes :
- on actionne l'actionneur principal,
- on module le mouvement de l'actionneur principal au moyen de l'actionneur secondaire (18), une unité de contrôle étant configurée pour piloter l'actionneur principal et l'actionneur secondaire (18) de manière à moduler le retour haptique généré par l'actionneur principal au moyen de l'actionneur secondaire (18).

## Patentansprüche

1. Aktuator (9) eines Berührungsschnittstellenmoduls (1) mit haptischer Rückmeldung, wobei das Schnittstellenmodul eine Berührungsfläche (3) umfasst, die geeignet ist, wenigstens ein Merkmal eines Drucks eines Benutzers zu detektieren, wobei der Aktuator (9) aufweist:
- einen Rahmen (11) und
- einen Hauptaktuator, der mit einem beweglichen Kern (13) ausgestattet ist, wobei der bewegliche Kern (13) mit dem Rahmen (11) zusammenwirkt und dazu bestimmt ist, in eine Bewegung zwischen äußersten Positionen versetzt zu werden, um die haptische Rückmeldung zu erzeugen,
- wobei der Hauptaktuator mit der Berührungsfläche (3) verbunden ist und geeignet ist, eine haptische Rückmeldung in Abhängigkeit von dem detektierten Druck zu erzeugen, und elektromagnetische Betätigungsmittel (15, 17) aufweist, um den beweglichen Kern (13) in Bewegung zu versetzen;
**dadurch gekennzeichnet, dass** der Aktuator (9) außerdem einen vorgesteuerten sekundären Aktuator 88) aufweist, der mit dem beweglichen Kern (13) verbunden ist und mit diesem zusammenwirkt, wobei der sekundäre Aktuator (18) somit ermöglicht, die Schwingungsformen des beweglichen Kerns (13) variieren zu lassen, sowie eine Steuereinheit, die dafür ausgelegt ist, den Hauptaktuator und den sekundären Aktuator (18) so vorzusteuern, dass die von dem Hauptaktuator erzeugte haptische Rückmeldung mittels des sekundären Aktuators (18) moduliert wird.

2. Aktuator (9) nach Anspruch 1, **dadurch gekennzeichnet, dass** der sekundäre Aktuator (18) einen piezoelektrischen Oszillator aufweist.

3. Aktuator (9) nach Anspruch 1, **dadurch gekennzeichnet, dass** der sekundäre Aktuator (18) elektromagnetische Betätigungsmittel aufweist.

4. Aktuator (9) nach einem der Ansprüche 1 bis 3, **dadurch gekennzeichnet, dass** die Steuereinheit dafür ausgelegt ist, den sekundären Aktuator (18) in Phase mit dem Hauptaktuator zu betätigen, so dass sich die Amplitude der Bewegung des sekundären Aktuators (18) zu derjenigen des Hauptaktuators addiert.

5. Aktuator (9) nach einem der Ansprüche 1 bis 3, **dadurch gekennzeichnet, dass** die Steuereinheit dafür ausgelegt ist, den sekundären Aktuator (18) gegenphasig zu dem Hauptaktuator zu betätigen, so dass sich die Amplitude der Bewegung des sekundären Aktuators (18) von derjenigen des Hauptaktuators subtrahiert.

6. Aktuator (9) nach einem der Ansprüche 1 bis 5, **dadurch gekennzeichnet, dass** die Steuereinheit dafür ausgelegt ist, den Haupt- und den sekundären Aktuator (18) asynchron zu betätigen.

7. Aktuator (9) nach wenigstens einem der vorhergehenden Ansprüche, **dadurch gekennzeichnet, dass** der sekundäre Aktuator (18) einerseits mit dem Rahmen (11) und andererseits mit dem beweglichen Kern (13) verbunden ist.

8. Aktuator (9) nach wenigstens einem der Ansprüche 1 bis 6, **dadurch gekennzeichnet, dass** der sekundäre Aktuator (18) einerseits mit dem Rahmen und andererseits mit der Berührungsfläche (3) verbunden ist.

9. Aktuator (9) nach wenigstens einem der Ansprüche 1 bis 7, **dadurch gekennzeichnet, dass** er zwei sekundäre Aktuatoren (18) aufweist, die einerseits mit dem Rahmen (11) und andererseits mit dem beweglichen Kern (13) verbunden sind und beiderseits des beweglichen Kerns (13) entlang der Verschiebeachse (*A-A*) des beweglichen Kerns (13) angeordnet sind.

10. Berührungsschnittstellenmodul (1) mit haptischer Rückmeldung, wobei das Schnittstellenmodul eine Berührungsfläche (3), die geeignet ist, einen Druck eines Benutzers zu detektieren, und wenigstens einen Aktuator (9) nach Anspruch 1 umfasst.

11. Schnittstellenmodul (1) nach Anspruch 10, wobei die elektromagnetischen Betätigungsmittel eine Spule (15) auf einer ersten Halterung und Magnete (17) auf einer zweiten Halterung aufweisen, wobei eine der Halterungen mit dem Rahmen (11) fest verbunden ist und die andere mit dem beweglichen Kern (13) fest verbunden ist, **dadurch gekennzeichnet, dass** es wenigstens einen sekundären Aktuator (18) aufweist, der einerseits mit der ersten Halterung und andererseits mit der zweiten Halterung verbunden ist.

12. Schnittstellenmodul (1) nach wenigstens einem der Ansprüche 10 oder 11, welches außerdem ein Gehäuse aufweist, das wenigstens teilweise Elemente des Schnittstellenmoduls enthält, **dadurch gekennzeichnet, dass** es außerdem wenigstens ein elastisches Mittel (19) zwischen dem beweglichen Kern (13) und dem Boden des Gehäuses aufweist.

13. Schnittstellenmodul (1) nach wenigstens einem der Ansprüche 10 bis 12, **dadurch gekennzeichnet, dass** es mehrere sekundäre Aktuatoren (18) aufweist, die von einer gemeinsamen Steuereinheit vorgesteuert werden, die dafür ausgelegt ist, den Hauptaktuator und die sekundären Aktuatoren (18) gemäß vorbestimmten Mustern zu betätigen, um eine Reihe von unterschiedlichen haptischen Rückmeldungen zu erzeugen.

14. Verfahren zur Erzeugung einer haptischen Rückmeldung in einem Berührungsschnittstellenmodul (1) mit haptischer Rückmeldung, das eine Berührungsfläche (3), die geeignet ist, einen Druck eines Benutzers zu detektieren, und wenigstens einen Aktuator (9) nach Anspruch 1 umfasst,
**dadurch gekennzeichnet, dass** das Verfahren die Schritte umfasst:
- Betätigen des Hauptaktuators,
- Modulieren der Bewegung des Hauptaktuators mittels des sekundären Aktuators (18), wobei eine Steuereinheit dafür ausgelegt ist, den Hauptaktuator und den sekundären Aktuator (18) so vorzusteuern, dass die von dem Hauptaktuator erzeugte haptische Rückmeldung mittels des sekundären Aktuators (18) moduliert wird.

## Claims

1. Actuator (9) for a touch-sensitive interface module (1) with haptic feedback, the interface module comprising a touch-sensitive surface (3) able to detect at least one characteristic of pressure by a user, the actuator (9) comprising:
- a frame (11) and
- a main actuator equipped with a mobile core (13), said mobile core (13) collaborating with the frame (11) and being intended to be driven in motion between extreme positions in order to generate the haptic feedback,
- the main actuator being connected to the touch-sensitive surface (3) and able to generate haptic feedback according to the pressure detected and comprising electromagnetic actuation means (15, 17) for driving the mobile core (13) in motion;
**characterized in that** the actuator (9) further comprises a controlled secondary actuator 88) connected to the mobile core (13) and collaborating therewith, said secondary actuator (18) thus making it possible to vary the forms of oscillation of the mobile core (13), and a control unit configured to control the main actuator and the secondary actuator (18) in such a way as to modulate the haptic feedback generated by the main actuator using the secondary actuator (18).

2. Actuator (9) according to Claim 1, **characterized in that** the secondary actuator (18) comprises a piezoelectric oscillator.

3. Actuator (9) according to Claim 1, **characterized in that** the secondary actuator (18) comprises electromagnetic actuation means.

4. Actuator (9) according to one of Claims 1 to 3, **characterized in that** the control unit is configured to actuate the secondary actuator (18) in phase with the main actuator so that the amplitude of the movement of said secondary actuator (18) is summed with that of the main actuator.

5. Actuator (9) according to one of Claims 1 to 3, **characterized in that** the control unit is configured to actuate the secondary actuator (18) in phase opposition with the main actuator so that the amplitude of the movement of said secondary actuator (18) is subtracted from that of the main actuator.

6. Actuator (9) according to one of Claims 1 to 5, **characterized in that** the control unit is configured to actuate the main actuator and secondary actuator (18) asynchronously.

7. Actuator (9) according to at least one of the preceding claims, **characterized in that** the secondary actuator (18) is connected firstly to the frame (11) and secondly to the mobile core (13) .

8. Actuator (9) according to at least one of Claims 1 to 6, **characterized in that** the secondary actuator (18) is connected firstly to the frame and secondly to the touch-sensitive surface (3).

9. Actuator (9) according to at least one of Claims 1 to 7, **characterized in that** it comprises two secondary actuators (18) which are connected firstly to the frame (11) and secondly to the mobile core (13) and are arranged one on each side of said mobile core (13) along the axis of movement (A-A) of the mobile core (13).

10. Touch-sensitive interface module (1) with haptic feedback, the interface module comprising a touch-sensitive surface (3) able to detect pressure by a user and at least one actuator (9) according to Claim 1.

11. Interface module (1) according to Claim 10, the electromagnetic actuation means comprising a coil (15) on a first support and magnets (17) on a second support, one of the supports being secured to the frame (11), the other being secured to the mobile core (13), **characterized in that** it comprises at least one secondary actuator (18) connected firstly to the first support and secondly to the second support.

12. Interface module (1) according to at least one of Claims 10 and 11, further comprising a casing at least partially containing elements of said interface module, **characterized in that** it further comprises at least one elastic means (19) between the mobile core (13) and the bottom of the casing.

13. Interface module (1) according to at least one of Claims 10 to 12, **characterized in that** it comprises a plurality of secondary actuators (18) controlled by a common control unit that is configured to actuate the main actuator and secondary actuators (18) in predetermined patterns in order to generate a range of different haptic feedbacks.

14. Method for generating haptic feedback in a touch-sensitive interface module (1) with haptic feedback comprising a touch-sensitive surface (3) able to detect pressure by a user, and at least one actuator (9) according to Claim 1,
**characterized in that** the method comprises the steps:
- the main actuator is actuated,
- the motion of the main actuator is modulated using the secondary actuator (18), a control unit being configured to control the main actuator and the secondary actuator (18) in such a way as to modulate the haptic feedback generated by the main actuator using the secondary actuator (18).
